# EUROPÄISCHE PATENTSCHRIFT

(11) **EP 3 866 589 B1**
(45) Veröffentlichungstag und Bekanntmachung des Hinweises auf die Patenterteilung: **28.08.2024**
(21) Anmeldenummer: 19828553.8
(22) Anmeldetag: 13.11.2019
(51) Int. Cl.: A01K 63/00, A01K 63/04, A01K 63/06, A01K 61/80

(54) **KREISLAUFKULTURSYSTEM, VERWENDEN EINES KREISLAUFKULTURSYSTEMS UND VERFAHREN ZUM BETREIBEN EINES KREISLAUFKULTURSYSTEMS**
RECIRCULATING CULTURE SYSTEM, USE OF A RECIRCULATING CULTURE SYSTEM AND METHOD FOR OPERATING A RECIRCULATING CULTURE SYSTEM
SYSTÈME DE CULTURE À RECIRCULATION, UTILISATION D'UN SYSTÈME DE CULTURE À RECIRCULATION ET PROCÉDÉ POUR FAIRE FONCTIONNER UN SYSTÈME DE CULTURE À RECIRCULATION

(30) Priorität: 13.11.2018 DE 102018008940
(43) Veröffentlichungstag der Anmeldung: 25.08.2021
(73) Patentinhaber: Hock, Aline, 25761 Warwerort (DE); Samuel, Biniam, 25761 Warwerort (DE)
(72) Erfinder: Hock, Aline, 25761 Warwerort (DE); Samuel, Biniam, 25761 Warwerort (DE)
(74) Vertreter: Rumrich, Gabriele
(86) Internationale Anmeldenummer: PCT/DE2019/100980
(87) Internationale Veröffentlichungsnummer: WO 2020/098882

(56) Entgegenhaltungen:
- IL-A- 252 390
- US-A- 2 594 474
- US-A1- 2004 149 233
- US-A1- 2017 325 427
- US-A1- 2018 249 649

## Beschreibung

Die Erfindung betrifft ein Kreislaufkultursystem zur Kultivierung und/oder Züchtung von aquatischen Lebewesen. Die Erfindung betrifft weiterhin das Verwenden eines Kreislaufkultursystems und ein Verfahren zum selbsttätigen Betreiben eines Kreislaufkultursystems zur Zucht von aquatischen Organismen.

Vor dem Hintergrund einer ständig wachsenden Weltbevölkerung und dem damit einhergehenden immens ansteigenden Bedarf der Lebensmittelproduktion gewinnt auch die Aquakultur immer mehr an Bedeutung. Insbesondere in den letzten Jahren ist auch die Nachfrage an nachhaltigen Lebensmitteln und umweltverträglichen Lösungen stets gewachsen.

Konventionelle Kreislauf-Aquakultursysteme erfordern typischerweise einen teilweisen Wasseraustausch, sind sehr energieintensive, großtechnische Systeme. Solche Systeme sind nicht modular aufgebaut und umfassen normalerweise Wasseraufbereitungssysteme, die für ein großes Wasservolumen von Kulturtanks bestimmt sind. In großen Systemen sind Eingriffe von speziell geschultem Personal erforderlich, um die täglichen Aktivitäten der Systeme aufrechtzuerhalten z.B. Füttern der Haltungsorganismen. Darüber hinaus sind solche Systeme typischerweise in Gebäuden untergebracht, um das System vor den Auswirkungen der Umweltveränderungen zu schützen.

Die Druckschrift EP 2343969 A2 beschreibt eine Fischbeckenanordnung, umfassend eine Vielzahl von Fischbecken und eine Messvorrichtung zur Erfassung von zumindest einem Wasserparameter des Haltungswassers innerhalb der Fischbecken. Das beschriebene Indoor-Fischbecken erzielt mit Hilfe der Rahmenkonstruktion eine Aufständerung des gesamten Fischbeckens, die es ermöglicht, dass wesentliche oder alle mit Wasser gefüllten Bereiche oberhalb des Gebäudebodens liegen, auf dem die Rahmenkonstruktion aufgestellt ist. Die Prozesssteuerung erfolgt aus einem separaten Technikraum heraus.

Die Druckschrift DE 20 2017 107 283 U1 offenbart eine Aquakulturanlage mit einem Kulturbehälter, einem Behälter zur Aufzucht von Futtertieren, einem Behälter zur Aufzucht von Pflanzen, sowie einem zusätzlichen Vorratsbehälter für das Kulturwasser, welche über einen Fluidkreislauf verbunden sind. Das System ist konstruktiv aufwendig und nicht ausreichend gegenüber externen Einflüssen abgeschirmt.

In der Druckschrift DE 10 2010 005 563 B4 wird ein Managementsystem zum Betreiben einer Aufzuchtvorrichtung mit einer Aquakultur zur kontrollierten Aufzucht von aquatischen Organismen beschrieben, welches Mittel zum Erfassen von Ist-Parametern umfasst und bei welchem unterschiedliche Ist-Parameter sowohl zu der Aufzuchtvorrichtung als auch zu der Aquakultur mittels der Mittel zum Erfassen erfasst werden können.

Die Druckschrift DE 10 2010 052 018 A1 betrifft ein komplex geschachteltes Kreislaufverfahren zur Land basierenden Aquakultur mit mindestens einem biologisch modifizierbarem Ressourcentank, in welchem mindestens ein Kreislauf aus Kulturtanks, Supportleitungen und Filtermodulen im freien Wasser integriert ist.

Die Druckschrift US 2017325427 A1 offenbart ein Kreislaufkultursystem zur selbsttätigen Kultivierung von aquatischen Lebewesen, aufweisend ein Kreislaufsystem, welches ein Kulturbecken zum Aufnehmen einer Flüssigkeit, ein Wasserreservoir zum Vorhalten der Flüssigkeit, eine Temperiervorrichtung, die eingerichtet ist, der Flüssigkeit thermische Energie zuzuführen und/oder zu entziehen, ein Pumpensystem zum Umwälzen der Flüssigkeit, und ein Filtersystem zum Filtern der Flüssigkeit aufweist. Das Kreislaufkultursystem weist ferner einen Behälter, eine Kamera, ein Sensorsystem und eine Steuervorrichtung auf, wobei das Kreislaufsystem in einem wenigstens einen Innenraum des Behälters angeordnet ist.

Aufgabe der Erfindung ist es, ein verbessertes Kreislaufkultursystem zur Kultivierung und/oder Züchtung von aquatischen Lebewesen zur Verfügung zu stellen, welches eine vereinfachte Anwendung für den Nutzer erlaubt.

Diese Aufgabe wird mit den Merkmalen des ersten, des zehnten und des elften Patentanspruchs gelöst. Vorteilhafte Ausgestaltungen ergeben sich aus den Unteransprüchen.

Erfindungsgemäß ist ein Kreislaufkultursystem zur selbsttätigen Kultivierung und/oder Züchtung von aquatischer Lebewesen, aufweisend die Merkmale des unabhängigen Anspruchs 1.

Der Begriff "aquatische Lebewesen" meint Wasserlebewesen wie Fische, Krebstiere, Muscheln, Korallen und/oder Pflanzen. Umfasst sind sowohl Süß- als auch Salzwasserlebewesen, kalt- und warmwasserliebende Organismen, Zier- und Speisefische.

Die Flüssigkeit ist eine zur Kultivierung und/oder Züchtung von aquatischen Lebewesen geeignete Flüssigkeit, insbesondere Wasser. Dabei kann es sich um Süßwasser oder um Salzwasser handeln.

Das Kulturbecken dient dazu, ein oder mehrere Individuen der zu kultivierenden und/oder zu züchtenden aquatischen Lebewesen aufzunehmen. Das Kulturbecken hat ein Fassungsvermögen von maximal 3500 I, bevorzugt maximal 2500 I, besonders bevorzugt maximal 1000 I.

Vorteilhafterweise hat das Kulturbecken eine runde Grundfläche. Diese ist bevorzugt kreisrund, weist also einen einheitlichen Durchmesser auf. Die Grundfläche kann auch elliptisch ausgebildet sein. Das Wasserreservoir hat vorzugsweise ein Fassungsvermögen von 200l bis 1000l, besonders bevorzugt von 300l bis 800l.

Zum Umwälzen der Flüssigkeit zwischen Kulturbecken, Wasserreservoir und Filterkammern ist ein Pumpensystem ausgebildet. Das Umwälzen erfolgt dabei vorzugsweise über Rohrführungen aus dem Kulturbecken durch einen oder mehrere erste Filterkammern des Filtersystems in das Wasserreservoir und von dem Wasserreservoir über einen oder mehrere zweite Filterkammern des Filtersystems in den Kulturbehälter. Zusätzlich können eine oder mehrere Pumpen im Kulturbecken angeordnet sein, um eine kontinuierlich durchmischende Strömung im Kulturbecken herbeizuführen.

Eine Temperiervorrichtung ist eingerichtet, der im Kreislaufkultursystem befindlichen Flüssigkeit thermische Energie zuzuführen und/oder zu entziehen. Es handelt sich dabei vorzugsweise um einen oder mehrere in der im Wasserreservoir befindlichen Flüssigkeit untergetauchte/n Heizstab/Heizstäbe und/oder alternativ oder ergänzend einen oder mehrere Kühler.

Das erfindungsgemäße Kreislaufkultursystem weist weiterhin einen Behälter auf, der einen Innenraum begrenzt. Der Behälter ist vorzugsweise in der Art einer Außenhülle ausgebildet. Vorzugsweise ist der Innenraum zusammenhängend. Alternativ können zwei oder mehrere Teilkompartimente des Innenraums voneinander vollständig oder weitestgehend getrennt vorliegen.

In einer bevorzugten Ausführungsform weist der Behälter ein Gehäuse und einen Deckel auf. Vorzugsweise weist das Gehäuse eine im Wesentlichen abgerundete Grundfläche auf. Das Gehäuse als eine äußere Hülle ausgebildet, um das Kreislaufkultursystem als ein abgeschlossenes Modul von Wettereinflüssen- und Temperaturschwankungen zu isolieren. Dadurch werden Änderungen der Haltungsparameter der aquatischen Organismen auf ein Minimum beschränkt. Dies verbessert die Haltungsbedingungen der aquatischen Organismen und schützt vor Krankheiten, Keimübertragung und anderen äußeren Einflüssen.

Der Deckel ist ausgebildet, um den Innenraum abzudecken. Im Deckel ist vorzugsweise eine Vorrichtung, die der Futterzufuhr in das Kulturbecken dient, angeordnet. Dabei handelt es sich bevorzugt um eine automatisierte Fütterungsmaschine.

Zudem können den Innenraum beleuchtende Elemente beispielsweise LEDs und/ oder andere Leuchtmittel an der Innenseite des Deckels und /oder am oberen Teil des Haltungsbeckens angebracht sein.

Im Deckel kann zudem eine in das Kulturbecken gerichtete Kamera angeordnet sein.

Ebenfalls im Deckel können ein oder mehrere Bewegungs- und/ oder Drucksensoren angeordnet sein, die erkennen, ob der Deckel sich in einem geöffneten oder einem geschlossenen Zustand befindet.

Das Gehäuse kann mit dem Deckel abschließbar ausgebildet sein, um ein unbefugtes Eingreifen in das Kreislaufkultursystem zu verhindern. Dies kann beispielsweise über einen RFID-Schlüssel (*Radio-Frequencyldentification*) realisiert werden. Alternativ können andere bekannte Identifikationssysteme verwendet werden. Beispielsweise kann der Deckel auch per App-Befehl von einem mobilen Endgerät geöffnet und/oder verschlossen werden.

Des Weiteren weisen der Deckel und das Gehäuse, eine oder mehrere Belüftungs- und Öffnungsrinne/n auf, durch die Feuchtigkeit entweichen und die Luft zirkulieren kann.

Erfindungsgemäß weist der Behälter eine oder mehr als eine Behälterwand auf, welche von einer Öffnung durchdrungen ist, wobei die Öffnung und das Kulturbecken derart zueinander eingerichtet sind, dass das Kulturbecken die Öffnung abdeckt, wenn dieses in dem Behälter angeordnet ist.

Reicht die Öffnung in der Behälterwand bis an den Deckel heran, so ist in dem die Öffnung überdeckenden Bereich des Deckels wenigstens ein Steg und/oder wenigstens eine Überführung und/oder wenigstens eine Brücke angeordnet, welche dazu dient, den Bereich über der Öffnung dicht abzuschließen. Dazu kann in dem Steg / in der Überführung / in der Brücke eine Nut angeordnet sein, welche eine Beckenwand des die Öffnung abdeckenden Kulturbeckens zumindest teilweise aufnimmt. Alternativ oder ergänzend kann in dem Steg / in der Überführung / in der Brücke eine entsprechende Dichtung angeordnet sein.

Vorteilhafterweise wird dadurch ein Sichtfenster geschaffen, durch das zum einen ein Lichteinfall in das Kulturbecken und zum anderen ein einfaches Einsehen in das Kulturbecken ermöglicht wird. Bevorzugt weist das Kulturbecken eine transparente Beckenwand auf, welche die Öffnung in der Behälterwand abdeckt. Die transparente Beckenwand wird somit zum Teil durch die Öffnung in der Behälterwand sichtbar. Das Kulturbecken und die Behälterwand des Behälters schließen am Sichtfester bündig ab, sodass keine Umwelteinwirkungen in den Innenraum des Kreislaufkultursystems eindringen können und/oder die Temperaturisolierung beeinträchtigt wird.

Die Wandung des Kulturbeckens ist bevorzugt aus Plexiglas ausgebildet. Insbesondere ist die Wandung lebensmittelecht ausgebildet. Alternativ kann die Wandung des Kulturbeckens aus einer Mehrfach-Verglasung oder aus einem Thermoglas ausgebildet sein, um die Temperaturverluste durch das Sichtfenster zu minimieren. Alternativ ist die Wandung des Kulturbeckens aus einem transparenten Kunststoff gebildet, der eine entsprechende Isolation gewährleistet.

Es kann eine Abdeckung für die Öffnung (für das Sichtfenster) vorhanden sein, die im Bedarfsfall verwendet werden kann, um die Öffnung (das Sichtfenster) abzudecken. Dies könnte notwendig sein, wenn das Kreislaufkultursystem im Freien steht und ungünstigen Witterungsbedingungen ausgesetzt ist. Die Abdeckung kann beispielsweise aus einem Flies, Isopren oder ähnlichen geeigneten Materialien ausgebildet sein. Die Abdeckung kann Teil des Kreislaufkultursystems sein oder separat ausgebildet sein.

Es gibt Ausführungsformen, aber nicht erfindungsgemäß, bei welchen die Behälterwand nicht von einer Öffnung durchdrungen ist. Bei diesen Ausführungsformen ist die Behälterwand vorzugsweise blickdicht ausgebildet. Vorteilhafterweise werden bei dieser Ausführungsform Bilder einer in das Innere des Kulturbeckens ausgerichteten Kamera auf eine an der Außenseite des Behälters angeordnete Anzeigeeinheit übertragen. Dies kann Live oder zeitversetzt erfolgen.

Erfindungsgemäß weist die eine oder mehr als eine Behälterwand einen Dämmstoff auf oder ist die eine oder mehr als eine Behälterwand aus einem Dämmstoff gebildet.

Die Behälterwand kann aus einer oder mehreren Schichten bestehen.

Die Materialien, aus denen die Behälterwand ausgebildet sein kann, sind vorzugsweise wetterbeständig und/oder temperaturisolierend.

Die Behälterwand und der Behälterdeckel können isolierende und/ oder dämmende Wirkung aufweisen.

Die Behälterwand kann aus Polyethylen oder einem anderen geeigneten thermoplastischen Kunststoff gebildet sein.

Die Behälterwand kann aus Naturmaterialien wie beispielsweise Zellulose Isolation und/ oder Kork und /oder Holz beispielsweise Kiefern-, Lärchen- oder Voll- oder Sperrholz bestehen.

Die Behälterwand kann auch kommerzielle Isolationsmaterialien wie beispielsweise Polystyrol, Styropor, Polyurethan oder Schaumstoffglas (cellular glass) aufweisen.

Die Behälterwand kann auch aus einer Kombination aus einem oder mehreren natürlichen Materialien und/oder einem oder mehreren kommerziellen Materialien bestehen.

Erfindungsgemäß weist das Kreislaufkultursystem ferner ein Sensorsystem auf, das in dem wenigstens einen Innenraum des Behälters angeordnet ist, wobei das Sensorsystem einen Temperatursensor, einen Sauerstoffsensor, einen Durchflusssensor, einen Leitfähigkeitssensor und/ oder ein pH-Sensor aufweist.

Der Temperatursensor ist bevorzugt im Kulturbecken angeordnet. Es können auch mehrere Temperatursensoren an verschiedenen Stellen im Kulturbecken angeordnet sein. Zudem können weitere Temperatursensoren im Wasserreservoir und/oder im Innenraum des Behälters außerhalb von Kulturbecken und Wasserreservoir angeordnet sein. Vorteilhafterweise kann die Temperatur im gesamten Bereich des Kreislaufkultursystems zuverlässig erfasst werden.

Zusätzlich kann ein Temperatursensor außerhalb des Behälters angeordnet sein, um die Umgebungstemperatur außerhalb des erfindungsgemäßen Kreislaufkultursystems zu erfassen.

Ein oder mehr als ein Sauerstoffsensor ist vorzugsweise im Kulturbecken und/ oder im Filtersystem und/oder Wasserreservoir angeordnet, um den Sauerstoffgehalt zu erfassen. Bevorzugt werden kontinuierlich Wasserparameter aufgenommen.

Ein Durchflusssensor ist vorteilhafterweise unmittelbar vor oder unmittelbar hinter wenigstens einer Pumpe des Pumpensystems angeordnet, um den Durchfluss durch die Pumpe zu erfassen. Sind mehrere Pumpen im Pumpensystem vorhanden, so ist vorzugsweise an jeder der Pumpen ein Durchflusssensor angeordnet.

Im Kulturbecken und/oder im Wasserreservoir sind vorzugsweise ein oder mehrere pH-Sensoren und ein oder mehrere Sensoren zur Messung des jeweiligen Redoxpotentials der Flüssigkeit angeordnet. Über diese können der Salzgehalt und die Alkalinität der Flüssigkeit, sowie eine eventuelle COz-Anreicherung im Kulturwasser erfasst werden.

Weiterhin kann im Gehäuse wenigstens ein erster Bewegungssensor mit einem im Inneren des Kulturbeckens liegenden Erfassungsfeld angeordnet sein. Mit Hilfe des Bewegungssensors können die Bewegungen und die Aktivitätsmuster der im Kulturbecken befindlichen aquatischen Lebewesen erfasst werden.

Es kann ergänzend wenigstens ein zweiter Bewegungs- und/oder Drucksensor am Deckel angeordnet sein, mit dessen Hilfe erkannt werden kann, ob und wie lange sich der Deckel in einem geöffneten Zustand befindet.

Sowohl im Kulturbecken als auch im Wasserreservoir können ein oder mehrere Wasserstandssensoren vorhanden sein. Diese erfassen eine Veränderung des Wasserstandes in den flüssigkeitsgefüllten Becken des Kreislaufkultursystems, welche beispielsweise durch ein Leck, aber auch durch eine zu starke / zu schwache Pumpleistung von einer oder mehreren Pumpen des Pumpensystems ausgelöst sein könnte.

An der Außenseite des Behälters kann ein Lichtsensor angeordnet sein, um die Lichteinstrahlung beispielsweise durch Sonnenlicht, auf das erfindungsgemäße Kreislaufkultursystem zu erfassen.

Weiterhin ist es möglich, an der Außenseite des Behälters einen Luftdruckmesseranzuordnen, welcher den Luftdruck außerhalb des erfindungsgemäßen Kreislaufkultursystems erfassen kann.

Zur Erfassung der Leitfähigkeit der Flüssigkeit können ein oder mehrere Leitfähigkeitssensoren, sowohl im Wasserreservoir, als auch im Kulturbecken angeordnet sein.

Erfindungsgemäß weist das Kreislaufkultursystem ferner eine Steuervorrichtung in dem Innenraum auf, welche eingerichtet ist, auf Grundlage von Daten des Sensorsystems das Kreislaufsystem anzusteuern.

Vorteilhafterweise kann damit direkt eine Anpassung des Kreislaufsystems an sich verändernde Bedingungen erfolgen, ohne dass ein zeitaufwendiger Eingriff durch eine Fachkraft notwendig wäre. Das Wohlbefinden und Gedeihen der im Kreislaufkultursystem befindlichen aquatischen Lebewesen wird auf diese Art deutlich gesteigert.

Bevorzugt weist das Kreislaufkultursystem eine oder mehr als eine Computerplatine zum Empfangen und Senden von Informationen zum und vom Steuersystem auf.

Die Steuervorrichtung ist in der Lage, die einzelnen Pumpen des Pumpensystems, die Temperiervorrichtung, die Vorrichtung für die Futterzufuhr, eine oder mehrere Luftpumpen und/oder einen Sauerstoffmischer für eine Sauerstoffzufuhr in die Flüssigkeit und eine Vorrichtung zur Salzanreicherung der Flüssigkeit anzusteuern.

Registrieren die Temperatursensoren im Inneren des Behälters eine Temperaturänderung, so kann die Steuervorrichtung die Temperiervorrichtung ansteuern und so ein Erwärmen oder ein Abkühlen der im Kreislaufsystem befindlichen Flüssigkeit selbsttätig herbeiführen.

Auch eine durch den an der Außenseite des Behälters angebrachten Temperatursensor registrierte Temperaturänderung kann von der Steuervorrichtung erfasst werden und in einer Ansteuerung des Temperatursystems durch die Steuervorrichtung resultieren. Beispielsweise kann eine erhöhte Außentemperatur durch eine stärkere Sonneneinstrahlung die Wassertemperatur des Kreislaufkultursystems ebenfalls erhöhen. Um dem vorzubeugen, kann eine erhöhte Außentemperatur bereits ein Ansteuern des Kühlers zur Folge haben, um die Temperatur der Flüssigkeit wieder entsprechend zu senken bzw. um einer Temperaturerhöhung der Flüssigkeit vorzubeugen.

Ein erhöhter Sauerstoffverbrauch der im Kreislaufkultursystem befindlichen aquatischen Lebewesen und/ oder ein Abfall des im Wasser gelösten Sauerstoffs kann von dem/den Sauerstoffsensor/en registriert werden. Die Steuervorrichtung kann diese Information nutzen, um eine oder mehrere Druckluftpumpen und/oder einen Sauerstoffgenerator anzusteuern und den Sauerstoffgehalt in der Flüssigkeit im Wasserreservoir und/oder im Kulturbecken wieder zu erhöhen.

Zur Reinhaltung der Flüssigkeit kann basierend auf Flüssigkeitsparametern wie Leitfähigkeit, Temperatur, Sauerstoffgehalt und Trübung, die Strömungsgeschwindigkeit, der Flüssigkeitsaustausch und die Flüssigkeitsmenge / Verweildauer im Filtersystem angepasst werden. Auch die Futtermenge und die Häufigkeit der Fütterungen können reguliert und im Alarmfall (z.B. im Falle einer registrierten Unreinheit der Flüssigkeit) abgestellt werden. Die Sauerstoffbegasung kann in Abhängigkeit von Umgebungs-, aktuell gemessenen und einprogrammierten Flüssigkeitsparametern erhöht oder vermindert werden.

Zur Vermeidung eines erhöhten Algenaufkommens im Kulturbecken kann basierend auf der Sonneneinstrahlung auf die Außenhülle und in das Kulturbecken, sowie einem Temperaturanstieg im Inneren des Behälters die Durchfluss- und/oder Strömungsgeschwindigkeit zwischen dem Kulturbecken und dem Filtersystem, insbesondere zwischen dem Kulturbecken und einer biologischen Filtereinheit gesteuert werden.

Um zu verhindern, dass Keime, Materialien oder Gegenstände in das Kulturbecken fallen oder der Deckel nach dem Öffnen nicht wieder verschlossen wird, kann nach einer vorgegebenen Öffnungszeit des Deckels, bevorzugt nach mehr als 3,5 Minuten Öffnungszeit eine Benachrichtigung an eine mobile Anwendung gesendet und/oder ein akustisches und/oder visuelles Alarmsignal abgegeben werden, um den Nutzer an das Schließen des Deckels zu erinnern.

Vorteilhafterweise passt die Steuervorrichtung das Ansteuern des Kreislaufsystems auf Grundlage von gespeicherten Nutzerdaten und/oder aufgezeichneten Erfahrungswerten und/oder einprogrammierten Zielwerten an.

Beispielsweise können programmierbare Tagesabläufe bereitgestellt werden, anhand derer Fütterungsmengen, Fütterungszeiten und Flüssigkeitswerte wie beispielsweise Temperatur, Salzgehalt, Sauerstoffgehalt reguliert werden.

Das Kreislaufkultursystem ist zur selbsttätigen Fischhaltung vorzugsweise entsprechend einem vorgegebenen Abarbeitungsprogramm ausgebildet, wobei die Haltungsparameter und/oder ein Umgebungszustand im Hinblick auf Zustandsparameter, wie z.B. Kulturwassertemperatur und/ oder pH, messbar ist/sind oder als Wert/e eingebbar ist/sind. Hierbei ist ein erhaltener Messwert oder eingegebener Wert mit einem in dem Abarbeitungsprogramm berücksichtigten Ausgangswert vergleichbar. Abweichungen zu dem Ausgangswert sind durch eine selbsttätige Anpassung von in dem Abarbeitungsprogramm enthaltenen Haltungsparametern wie optimaler Temperaturbereich und/ oder Fütterungsmenge berücksichtigbar.

Darüber hinaus können insbesondere Umgebungswerte als Umgebungsparameter auch durch selbsttätige Übertragung, etwa durch w-Lan, Bluetooth und/ oder sonstige Funksignale von außerhalb des Kreislaufkultursystems befindlichen Geräten erlangt sein. Des Weiteren können derartige Umgebungsparameter, wie beispielsweise Lufttemperatur oder Sonnenscheindauer, von dem Kreislaufkultursystems zur Eingabe von Hand durch einen Benutzer anforderbar sein. Im Falle, dass ein Wert nicht eingegeben wird, kann auch vorgesehen sein, dass auf einen Standardwert übergegangen wird beziehungsweise der schon zugrunde gelegte Wert belassen wird.

Die durch die Kamera erfasste Länge der Fische, die als Maß für die im Becken befindliche Biomasse der gehaltenen Art herangezogen werden kann, kann in einem Abarbeitungsprogramm, gegebenenfalls tabellenmäßig und mit gewisser Bandbreite, als Ausgangswert erfasst und vorgegeben sein.

Die Einrichtung des Kreislaufkultursystems derart, dass es die genannten oder zumindest einen der Haltungsparameter und/oder Umgebungsparameter ermitteln kann, und auch auf das Abarbeitungsprogramm einwirken kann, ist insbesondere auch dadurch erreicht, dass das Kreislaufkultursystem einen Mikroprozessor aufweist, der eine entsprechende Verarbeitung von erfassten Signalen durchführen kann. Durch diesen Mikroprozessor wird bevorzugt auch das Abarbeitungsprogramm als solches gesteuert. Dem Mikroprozessor ist vorzugsweise, weiter vorzugsweise in dem Kreislaufkultursystem selbst ein Datenspeicher, insbesondere ein nicht flüchtiger, aber bevorzugt änderbarer, Datenspeicher zugeordnet, in welchem ein Arbeitsprogramm und/oder eine Wertetabelle etc. gespeichert sein können. Weiter können ein oder mehrere Sensoren vorgesehen sein, die unmittelbar in dem Sensorsystem angeordnet sind und die gewünschten Werte liefern. Die Ermittlung der Werte kann auch durch die Verfahrensweisen des Kreislaufkultursystems, wie vor- und nachstehend auch erläutert und hierbei erfasste Parameter erreicht sein. Weiter alternativ oder ergänzend können Werte auch frei eingegeben werden, etwa im Hinblick auf eine Abfrage durch das Kreislaufkultursystem. Dies können Werte, wie spezifische Fischart, Anfangsgewicht der eingesetzten aquatischen Organismen, Temperatur des Herkunftssystems etc., sein. Die sensormäßige Erfassung von Haltungsdaten ist also nicht darauf beschränkt, dass die Erfassung vor und/oder mit Beginn der Haltung erfolgt. Vielmehr kann auch während der Abarbeitung eines Haltungsprogramms eine Erfassung eines Haltungsparameters erfolgen.

Die Daten aus externen Funksignalen beispielsweise Wetterdaten können für eine schrittweise Anpassung der Haltungstemperatur beispielsweise für wärmere Episoden herangezogen werden. Die Auswertung dieser Daten kann beispielsweise langfristig zur Optimierung der Kühlung bzw. Erwärmen des Kulturwassers herangezogen werden. Beispielsweise kann bei einem Temperaturumschwung der normale Tagesrhythmus aus dem Abarbeitungsprogramm unter der Nutzung von Wetterdaten (Datenbasiert) und Umgebungsparametern (Sensorbasiert) schrittweise angepasst werden, beispielsweise durch eine Anpassung der Haltungstemperatur.

Durch die Kamera kann über das Gewicht-Länge-Verhältnis der Fische die vorhandene Biomasse im Kulturbecken ermittelt werden. Sollte durch eine Teilbefischung die Biomasse reduziert worden sein, passt das Abarbeitungsprogramm selbsttätig die Fütterungsmenge (kg/ g) an den vorhandenen Fischbesatz an.

Bevorzugt weist das erfindungsgemäße Kreislaufkultursystem ferner eine Anzeigevorrichtung auf, welche an einem Äußeren des Behälters befestigt und/oder in diesen integriert ist, wobei die Steuervorrichtung ferner eingerichtet ist, mittels der Anzeigevorrichtung eine oder mehr als eine Angabe über einen Systemzustand des Kreislaufsystems auszugeben.

Bevorzugt weist die Anzeigevorrichtung ein Display auf.

Vorteilhafterweise können dadurch direkt am Kreislaufkultursystem Informationen bezüglich des Systemzustandes abgerufen werden. Insbesondere erfolgt dies über eine benutzerfreundliche, intuitiv bedienbare Oberfläche.

Über ein Gateway können sowohl die Steuervorrichtung als auch die Anzeigevorrichtung mit einer Cloud kommunizieren. Über die Cloud kann das System beispielsweise die Wettervorhersage aus dem Internet abrufen und es kann bereits eine Vorbereitung des Kreislaufkultursystems auf eine bestimmte Wetterlage getroffen werden. Beispielsweise kann bereits in den frühen Morgenstunden ein Kühlvorgang starten, wenn für den Tag eine erhöhte Sonneneinstrahlung erwartet wird.

Über die Anzeigevorrichtung oder alternativ über zusätzliche Anzeigeelemente können zudem Werbeanzeigen oder ähnliches dargestellt werden.

Insbesondere weist die Anzeigevorrichtung wenigstens drei, bevorzugt wenigstens fünf, besonders bevorzugt wenigstens 10 berührungsgesteuerte Lichtkomponenten auf.

In einer weiteren bevorzugten Ausführungsform weist die Anzeigevorrichtung wenigstens vier LED-Platten auf.

Dabei kann es sich um transparente LED-Displays handeln.

Alternativ kann der Behälter über einen Teil seiner Außenfläche oder weitestgehend durchgehend mit LED-Platten besetzt sein. Durch diese digitale und visuelle Quelle werden weitere sozio-interaktive Aspekte mit der Fischzucht verknüpft.

Beispielsweise kann so die Interaktion von Menschen und Kindern mit dem aufgestellten Kreislaufkultursystem angeregt werden. Es können edukative, werbe- oder Live-Inhalte wie z.B. ein Livestream aus dem Kulturbecken gezeigt werden. Damit werden Störungen der aquatischen Organismen im Kulturbecken vermieden und die menschliche Interaktion mit der urbanen Aquakultur verknüpft.

Vorteilhafterweise kann durch die Steuervorrichtung direkt auf sich verändernde Prozess- und/oder Umgebungsbedingungen des erfindungsgemäßen Kreislaufkultursystems reagiert werden, ohne, dass ein Eingreifen und Regulieren durch einen Nutzer nötig wird.

Insbesondere ist die Steuervorrichtung ferner eingerichtet, eine Nachricht gemäß einem Netzwerk-Kommunikationsprotokoll zu generieren und/oder zu übermitteln, wobei die Nachricht eine oder mehr als eine Angabe über einen Systemzustand des Kreislaufsystems aufweist und/oder an ein mobiles Endgerät adressiert ist.

Fällt beispielsweise der Sauerstoffmesswert im Kulturbecken unter einen artspezifisch definierten Schwellenwert, so kann das Absenden einer Meldung auf ein mobiles Endgerät und/oder ein akustisches und/oder visuelles Alarmsignal erfolgen.

Die Messwerte des Feuchtesensors und des Wasserstandsensors können von der Steuervorrichtung mit definierten Schwellenwerten abgeglichen werden. Bei Abweichungen kann eine Benachrichtigung an eine mobile Anwendung gesendet und/oder ein akustisches und/oder visuelles Alarmsignal abgegeben werden. Zudem können alle oder die meisten der elektronischen Anwendungen (beispielsweise bis auf die Wasserbelüftung) gedrosselt oder eingestellt werden.

Registrieren die Temperatursensoren im Inneren des Behälters und an seiner Außenseite einen starken Temperaturanstieg, so kann ein elektronischer Defekt und/oder ein Brand und/oder eine Überhitzung bestimmter Systemkomponenten vorliegen. Registriert beispielsweise der Temperatursensor im Innenraum des Behälters eine Trockentemperatur von mehr als 30 °C oder eine graduelle Zunahme von über 10 °C in einem sehr kurzen Zeitraum, bevorzugt in einem Zeitraum von weniger als 10 Minuten, besonders bevorzugt in einem Zeitraum von weniger als 5 Minuten, so kann eine Benachrichtigung an eine mobile Anwendung gesendet und/oder ein akustisches und/oder visuelles Alarmsignal abgegeben werden. Zudem können alle oder die meisten der elektronischen Anwendungen (beispielsweise bis auf die Wasserbelüftung) gedrosselt oder eingestellt werden um einen weitergehenden Schaden zu vermeiden.

Um einen elektronischen Defekt und/oder einen Brand zu registrieren, kann im Inneren des Behälters ein Rauchmelder vorgesehen sein.

Es können zudem ein oder mehrere Gewichtssensoren an der Vorrichtung für die Futterzufuhr angeordnet sein. Registriert die Steuervorrichtung beispielsweise ein Vorhandensein von weniger als einem Drittel des benötigten Futtermittels in der Vorrichtung für die Futterzufuhr, so kann eine Benachrichtigung an eine mobile Anwendung gesendet und/oder ein akustisches und/oder visuelles Alarmsignal abgegeben werden.

Im Falle eines Stromausfalles kann ebenfalls eine Benachrichtigung an eine mobile Anwendung gesendet und/oder ein akustisches und/oder visuelles Alarmsignal abgegeben werden. Ein Stromausfall kann beispielsweise über einen Spannungsmesser und/oder einen Drehzahlmesser detektiert werden. Zudem können alle oder die meisten der elektronischen Anwendungen (beispielsweise bis auf die Wasserbelüftung) gedrosselt oder eingestellt werden.

Vorteilhafterweise ist eine Batterie oder ein Notfallaggregat oder ein Speichermedium angeordnet, über welches bevorzugt eine Versorgung über wenigstens 60 Minuten, besonders bevorzugt wenigstens 120 Minuten sichergestellt wird. Dieser Zeitraum wird als standardgemäß betrachtet um Reparaturmaßnahmen und/oder Notfallmaßnahmen einzuleiten.

Durch die Möglichkeit der Generierung und/oder Übermittlung einer Nachricht durch die Steuervorrichtung sowie das weitergehende Belüften des Kulturbeckens werden vorteilhafterweise die Zeiten in denen ein potentieller Fehler vom Nutzer unbemerkt bleibt, minimiert und eine zeitnahe Reparatur und schadenfreie Behebung der Fehlerquelle wird ermöglicht.

Vorzugsweise weist das Filtersystem einen oder mehr als einen anaeroben Biofilter und einen oder mehr als einen aeroben Biofilter auf.

Der eine oder mehr als eine anaerobe Biofilter ist vorzugsweise zylindrisch aufgebaut. Der eine oder mehr als eine aerobe Biofilter ist vorzugsweise direkt oder indirekt an das Kulturbecken angeschlossen.

Bevorzugt weist das Pumpensystem wenigstens eine Pumpe auf, die Flüssigkeit von dem einen oder mehr als einen anaeroben Biofilter erhält und zu einem oder mehr als einem aeroben Biofilter pumpt. Die Flüssigkeit, die das Filtersystem passiert hat, wird wieder dem Wasserreservoir zugeführt.

Besonders bevorzugt weist der eine oder mehr als eine anaerobe Biofilter zwei oder mehr als zwei anaerobe Biofilterkammern auf und weist der eine oder mehr als eine aerobe Biofilter sechs oder mehr als sechs aerobe Biofilterkammern auf. Dadurch wird eine optimale Nährstoffaufarbeitung und konstante Wasserqualität gewährleistet.

Das innovative Filtrationssystem gewährleistet durch eine Kombination aus mehrkammerigen aeroben und anaeroben Biofiltern, sowie durch eine automatisierte Steuerung eine Optimierung des im Kreislaufsystem akkumulierten Nitrit- und Ammoniumgehaltes.

Im Inneren des Behälters ist ferner eine Kamera angeordnet, deren Erfassungsfeld im Wesentlichen im Inneren des Kulturbeckens liegt. Eine solche Kamera kann auch direkt im Inneren des Kulturbeckens und/ oder Deckels angeordnet sein. Über eine automatische Bildauswertung der von der Kamera erfassten Daten, können Informationen bezüglich Wachstum und Aktivität der im Kulturbecken befindlichen aquatischen Organismen gesammelt werden. Auf Basis dieser Informationen kann beispielsweise ein optimaler Zeitpunkt für die Ernte angepasst werden. Detektiert die Kamera auf dem Boden des Kulturbeckens befindliches Futter, so kann die Vorrichtung für die Futterzufuhr derart angesteuert werden, dass die Futterzufuhr reduziert oder unterbrochen wird. Somit wird die Wasserqualität hoch gehalten und keine Ressourcen z.B. Futtermittel unnötig verbraucht.

Es kann eine Anpassung des Programmablaufes basierend auf den Haltungsparametern beispielsweise durch die Auswertung der Kameradaten vorgenommen werden. Dies kann durch den Nutzer eingegeben oder durch die Programmautomatik automatisch angepasst werden.

Basierend auf den Kameradaten kann die Biomasse der aquatischen Organismen, also Gewicht und Anzahl der Tiere ermittelt werden. Kommt es zu einer Entnahme einzelner Organismen (Teilschlachtung) wird die Futtermenge auf die reduzierte Biomasse angepasst und die Futtermenge proportional zur Besatzdichte verringert.

Basierend auf den Kameradaten kann es zu einer Anpassung der Erntezeit kommen, da durch schnelleres Wachstum oder höheres Anfangsgewicht das gewünschte/ optimale Endgewicht früher erreicht wird.

Die Kamera kann darüber hinaus eine Trübung der Flüssigkeit, beispielsweise durch Algenbefall, registrieren.

Basierend auf den Bewegungen, sowie dem Aktivitätsmuster der im Kulturbecken befindlichen aquatischen Lebewesen und den Umgebungsbedingungen können die Haltungsparameter zur Optimierung des Wohls der im Kulturbecken befindlichen aquatischen Lebewesen, das heißt zu deren Stressreduktion, angepasst werden.

An der Außenseite des Behälters kann statisch oder dynamisch eine Außenbeleuchtung angeordnet sein. Diese kann beispielsweise interaktiv, durch Touch- und/oder Bewegungssensoren und/oder durch einen An-Aus-Schalter und/oder durch eine Zeitschaltuhr angesteuert werden.

Zudem können an der Außenseite des Behälters Werbeanzeigen angeordnet sein. Denkbar wären Werbeanzeigen in digitaler oder in gedruckter Form. Ebenfalls denkbar wäre eine digitale vollumfassende LED-Anzeige an der Außenseite des Behälters, welche Bilder einer Kamera aus dem Inneren des Kulturbeckens überträgt, und/ oder Videoaufzeichnungen oder Livebilder und/oder Werbematerialien darstellt.

An der Außenseite des Behälters können zudem Pflanzenaufwuchsgefäße angeordnet sein, welchen manuell oder automatisch Nährstoffe aus dem Kulturbecken des erfindungsgemäßen Kreislaufkultursystems zugeführt werden können. In den Pflanzenaufwuchsgefäßen können Zierpflanzen und/oder essbare Pflanzen und/oder andere Nutzpflanzen angepflanzt werden. Des Weiteren können an die Außenhülle weitere Vorrichtungen wie Sitzmöglichkeiten, Solarpanels oder ähnliche Zusatzangebote verknüpft werden.

Die Aufgabe wird weiterhin gelöst, gemäß dem unabhängigen Anspruch 10, durch das Verwenden eines erfindungsgemäßen Kreislaufkultursystems zur Kultivierung und/oder Züchtung von aquatischen Lebewesen.

Die Aufgabe wird ferner gelöst durch ein Verfahren zum Betreiben eines erfindungsgemäßen Kreislaufkultursystems gemäß dem unabhängigen Anspruch 11.

Der Begriff "aquatische Lebewesen" meint Wasserlebewesen wie Fische, Krebstiere, Muscheln, Korallen und/oder Pflanzen. Umfasst sind sowohl Süß- als auch Salzwasserlebewesen, kalt- und warmwasserliebende Organismen, Zier- und Speisefische.

Die im Kreislaufsystem vorhandene Flüssigkeit ist eine zur Kultivierung und/oder Züchtung von aquatischen Lebewesen geeignete Flüssigkeit, insbesondere Wasser. Dabei kann es sich um Süßwasser oder um Salzwasser handeln.

Ein Arbeitspunkt gemäß einer Voraussetzung zur Kultivierung und/oder Züchtung der aquatischen Lebewesen meint einen Prozesszustand, in dem optimale oder nahezu optimale Bedingungen für die Kultivierung und/oder Züchtung der aquatischen Lebewesen vorhanden sind. Dieser wird beschrieben durch eine bestimmte Temperatur der Flüssigkeit, eine bestimmte Fütterungsrate und -menge, einen bestimmten Salzgehalt der Flüssigkeit, einen bestimmten Sauerstoffgehalt der Flüssigkeit, eine bestimmte Belichtung des Kulturbeckens, sowie weitere, dem Fachmann bekannte Parameter. Mittels eines Pumpensystems wird die Flüssigkeit umgewälzt. Mittels einer Temperiervorrichtung wird die Flüssigkeit temperiert. Mehrere Sensoren erfassen die Prozess- und/oder Umgebungsparameter des Kreislaufkultursystems.

Eine Steuervorrichtung empfängt die Daten der verschiedenen Sensoren und wertet diese aus. Basierend auf der Auswertung und/oder auf voreingestellten Sollwerten steuert die Steuervorrichtung verschiedene Prozesskomponenten des Kreislaufsystems an, wie beispielsweise die einzelnen Pumpen des Pumpensystems, die Temperiervorrichtung, eine Vorrichtung für die Futterzufuhr, eine oder mehrere Luftpumpen und/oder einen Sauerstoffgenerator für eine Sauerstoffzufuhr in die Flüssigkeit und z.B. eine Vorrichtung zur Salzanreicherung der Flüssigkeit.

Vorteilhafterweise kann damit direkt eine Anpassung des Kreislaufsystems an sich verändernde Bedingungen erfolgen, ohne dass ein zeitaufwendiger Eingriff durch eine Fachkraft notwendig wäre. Das Wohlbefinden und Gedeihen der im Kreislaufkultursystem befindlichen aquatischen Lebewesen wird auf diese Art deutlich gesteigert. Das durch das erfindungsgemäße Verfahren betriebene Kreislaufsystem ist vorteilhafterweise selbststätig und autark.

Das Umwälzen der Flüssigkeit erfolgt vorzugsweise aus dem Kulturbecken über einen oder mehrere erste Filter des Filtersystems in das Wasserreservoir und von dem Wasserreservoir über einen oder mehrere zweite Filter des Filtersystems in den Kulturbehälter. Das Umwälzen erfolgt dabei insbesondere über Rohre und Leitungen.

Zusätzlich kann mittels einer oder mehr als einer Pumpe im Kulturbecken eine Strömung im Kulturbecken herbeigeführt werden.

Bevorzugt bringt die Steuervorrichtung das Kreislaufkultursystem in den Arbeitspunkt gemäß einer Voraussetzung zur Kultivierung und/oder Züchtung der aquatischen Lebewesen.

Die Steuervorrichtung kann dabei entweder vom Nutzer programmiert werden oder die Steuervorrichtung kann das Kreislaufkultursystem aufgrund werksseitig vorgenommener Einstellungen / Voreinstellungen steuern und das Kreislaufkultursystem somit selbsttätig in den Arbeitspunkt gemäß einer Voraussetzung zur Kultivierung und/oder Züchtung der aquatischen Lebewesen bringen. Bevorzugt weist das erfindungsgemäße Verfahren ferner den Schritt
- Entnehmen der aquatischen Lebewesen, wobei in dem Zeitraum zwischen dem Einbringen und dem Entnehmen das Kreislaufsystem in dem Innenraum des Behälters verbleibt auf. Vorteilhafterweise steuert die Steuervorrichtung das Kreislaufkultursystem weitestgehend autonom. Nur wenig Arbeitsaufwand wie beispielsweise ein regelmäßiges Nachfüllen des Futtermittels durch den Nutzer ist während einer Zuchtperiode notwendig.

Nach Ende einer Zuchtperiode ist eine umfassende Reinigung des Kreislaufkultursystems durch den Nutzer notwendig.

Bei dem erfindungsgemäßen Verfahren erfolgt über eine Programmautomatik die selbsttätige Durchführung eines oder mehrerer Besatzzyklen für die Aufzucht/Haltung aquatischer Organismen. Dabei werden die Artspezifischen Haltungsparameter (z.B. Artspezifischer Temperaturbereich) und die Umgebungsparameter (z.B. Außentemperatur) durch die Messsensorik erfasst und selbststätig mit der Programmautomatik sowie externen Daten (z.B. über W-Lan) abgeglichen und durch die Steuerung gegebenenfalls regulierende Maßnahmen ergriffen. Dies stellt ein einzigartiges Verfahren im Bereich der Kreislaufaquakultur dar, denn es ermöglicht dem Endnutzer erstmals den Betrieb eines selbsttätigen Zuchtsystems. Auf diese Weise kann einer interessierten Kundengruppe die Fischzucht ermöglicht werden.

Die Eingabe und Steuerung durch den Benutzer erfolgt bevorzugt über ein Display oder andere geeignete interaktive Berührungselemente.

Basierend auf der Haltungstemperatur und dem Sauerstoffgehalt im Kulturwasser erfolgt eine Anpassung des Fütterungsregimes. Bei einem zu geringen Sauerstoffgehalt oder bei zu hohen oder zu niedrigen Haltungstemperaturen kommt es zur Regulierung des Programmablaufs durch eine Verringerung der Futtermenge und ein Schrittweises Abdunkeln der Beleuchtung im Kulturbecken.

Basierend auf den Haltungsparametern erfolgen weitere Programmanpassungen. Basierend auf den Kameradaten wird die Biomasse der Fische, Gewicht und Anzahl der Tiere ermittelt. Kommt es zu einer Entnahme einzelner Fische (Teilschlachtung), wird die Futtermenge auf die reduzierte Biomasse angepasst. Basierend auf den Kameradaten kann es zu einer Anpassung der Erntezeit kommen, da durch schnelleres Wachstum oder höheres Anfangsgewicht das gewünschte/ optimale Endgewicht früher erreicht wird.

Vorteilhafterweise werden durch das erfindungsgemäße Kreislaufkultursystem und das erfindungsgemäße Verfahren die fachlichen Anforderungen an einen Nutzer des Kreislaufkultursystems reduziert.

Durch die kontinuierliche Wasserreinigung, stabile Wasserparameter wie Temperatur und Wasserchemie können besonders temperaturempfindliche und/oder haltungsaufwendige Arten wie Jungfische, Muttertierpaare oder Zierfische einfach handhabbar und kontinuierlich optimierend gehalten werden.

Der konstante Erhalt optimaler Haltungsbedingungen für die im erfindungsgemäßen Kreislaufkultursystem befindlichen aquatischen Lebewesen wird vorteilhafterweise unter ressourcenschonendem Einsatz erreicht. Dies erfolgt mit besonders effizientem Wasser- und Energieverbrauch.

Besonders vorteilhaft ist, dass das erfindungsgemäße Kreislaufkultursystem ein umwelt- und temperaturisoliertes System ist. Durch die Abkapselung der Haltungsumgebung inkl. technischer Komponenten von den Umwelteinflüssen werden im Vergleich zu offenen Fischzuchtsystemen (z.B. Teilkreislaufanlagen und/ oder Durchflussanlagen) die Interaktion mit der lebenden Umwelt (Wildtiere, Parasiten und Bakterien) sowie der anorganischen Umwelt (Boden, Grundwasser, Wetter- und Temperaturschwankungen) verhindert.

Dies dient dem Schutz der Haltungsorganismen durch Erreichen von verbesserten Haltungsbedingungen, sowie der Vermeidung von Krankheiten und Keimübertragung. Es reduziert Ressourcenverbrauch (z.B. Energie-, Futter-, Wassereinsatz) was bei anderen Anwendungen im Stand der Technik durch externe, beheizte Hallen und mittels Desinfektionsmitteln versucht wird. Dies alles wird in diesem technischen Ansatz durch individuell-isolierte Haltungssysteme erreicht.

Das erfindungsgemäße Kreislaufkultursystem ermöglicht einen modularen -bei Bedarf erweiterbaren-Aufbau im Innen- und Außenbereich. Es weist ein temperaturisoliertes, hochautomatisiertes und geschlossenes Kreislaufsystem auf, das durch die Verwendung von loT (Internet of Things) und einer mobilen Anwendung gesteuert werden kann, so dass Aufwand und Ressourcen reduziert werden. IoT entsprich vorteilhafterweise dem Steuerungssystem, da die Steuerung vorzugsweise mittels Gateway mit einer Cloud verbunden ist.

Das erfindungsgemäße Verfahren zeichnet sich durch einen einzigartigen automatisierten und damit Kundenorientierten Aspekt aus. Es weist verschiedenste oben erläuterte Kunden- und Tierwohl-/haltungsrelevanten Charakteristika auf.

Anwendungsgebiete des erfindungsgemäßen Kreislaufkultursystems und des erfindungsgemäßen Verfahrens liegen in der kommerziellen und privaten Fischzucht, in der Aquaristik und in der Aquakultur-Forschung. Das erfindungsgemäße Kreislaufkultursystem und das erfindungsgemäße Verfahren sind sinnvoll für die Kultivierung von Süß-, als auch Meerwasserorganismen, wobei die oben genannten aquatischen Arten, die folgenden sein können: Garnelen, Meeresfische und marine Fingerlinge, Süßwasserfische und deren Fingerlinge, Molluskenarten, Algen und zahlreiche weitere. Diese Aufzählung ist nicht abschließend.

Die Erfindung wird nachfolgend anhand von Ausführungsbeispielen und zugehörigen Zeichnungen näher erläutert, ohne dabei auf diese beschränkt zu sein.

Dabei zeigen:
- Figur 1:: schematisch eine Ausführungsform des erfindungsgemäßen Kreislaufkultursystems mit geschlossenem Deckel;
- Figur 2:: schematisch eine Ausführungsform des erfindungsgemäßen Kreislaufkultursystems mit geöffnetem Deckel;
- Figur 3:: eine schematische Darstellung der wesentlichen Komponenten einer Ausführungsform des erfindungsgemäßen Kreislaufkultursystems;
- Figur 4:: ein Schaltbild der wesentlichen Komponenten einer Ausführungsform des erfindungsgemäßen Kreislaufkultursystems;
- Figur 5:: eine schematische Darstellung einer Ausführungsform eines Verfahrens zur Kultur von aquatischen Lebewesen, wie es mittels des erfindungsgemäßen Kreislaufkultursystems durchführbar ist;
- Figur 6:: eine schematische Darstellung der Futtermengenanpassung am Beispiel der steigenden Temperatur im Kulturbecken bei der Haltung von Regenbogenforellen.

### Ausführungsbeispiel für ein erfindungsgemäßes am Beispiel der Stressreduktion durch Anpassung der Haltungsparameter am Beispiel der Regenbogenforelle:

Die ideale Haltungstemperatur schwankt zwischen 13-15 °C (je nach Quelle) und wird je nach Umgebungsparametern (Standort und Außentemperaturen) die Zuchtperiode über kontinuierlich gehalten.
1. wenn die Temperatur mehr als 16,5 °C beträgt, wird die Fütterung um 50% der täglichen Futtermenge reduziert. Wenn die Temperatur mehr als 18 °C beträgt, wird die automatische Fütterung gestoppt. Auf diese Weise wird der Metabolismus gedrosselt und das Stresslevel der Tiere gemindert. Dies ist ein angepasstes Verfahren, um Stress und Mortalität zu reduzieren.
2. Wenn die Sauerstoffmenge weniger als 5,5 mg/l beträgt, wird die Futtermenge um 50% reduziert und der Wasseraustausch um mindestens 20% gesteigert. Bei einer Sauerstoffmenge von weniger als 4 mg/l beträgt wird die Futtermenge um 100% reduziert und der Wasseraustausch um 40% gesteigert.
3. Bei hoher Temperatur (über der idealen Haltungstemperatur) wird das Licht schrittweise abgedämmt und somit das Aktivitäts- und Stresslevel der Tiere indirekt reduziert. Eine Abdämmung des Lichts wird vorzugsweise auch bei anderen Stresssituationen eingesetzt.

### Ausführungsbeispiel für ein Verfahren am Beispiel der Stressreduktion durch Anpassung der Haltungsparameter am Beispiel von Tilapia:

Die ideale Haltungstemperatur schwankt zwischen 24-26 °C (je nach Quelle) und wird je nach Umgebungsparametern (Standort und Außentemperaturen) die Zuchtperiode über kontinuierlich gehalten.
1. wenn die Temperatur weniger als 22,5 °C beträgt, wird die Fütterung um 50% der täglichen Futtermenge reduziert. Wenn die Temperatur weniger als 20 °C beträgt, wird die automatische Fütterung gestoppt. Auf diese Weise wird der Metabolismus gedrosselt und das Stresslevel der Tiere gemindert. Dies ist ein angepasstes Verfahren, um Stress und Mortalität zu reduzieren.
2. Bei zu niedriger/zu hoher Temperatur (unter bzw. über der idealen Haltungstemperatur) sowie einem hohen Ammoniumlevel wird das Licht schrittweise abgedämmt und somit das Aktivitäts- und Stresslevel der Tiere indirekt reduziert. Eine Abdämmung des Lichts wird vorzugsweise auch bei anderen Stresssituationen eingesetzt.

### Ausführungsbeispiel für ein Verfahren zur Vermeidung des Erreichens von toxischen Konzentrationen von Ammonium:

Hohe Ammoniumlevel in dem Haltungswasser für die Haltung aquatischer Organismen können toxische Eigenschaften haben. Daher ist das erfindungsgemäße Kreislaufkultursystem ausgestattet mit einem mehrkammerigen aeroben und anaeroben Biofilter. Zusätzlich ist ein Verfahren zur Vermeidung des Erreichens von toxischen Konzentrationen im Kulturbecken entwickelt worden.

Wenn das Ammoniumlevel bei 0 bis 0,5 mg/l liegt wird eine routinemäßige Wasserdurchspülung der Filterkammern durchgeführt. Steigt der Sensorwert für das Ammoniumlevel auf 0,5 bis 1 mg/l im Haltungsbecken, dann wird die Wasseraustauschrate um 30% vom Ausgangswert gesteigert. Die Pumpleistung wird intensiviert und die Beleuchtung des Beckens schrittweise heruntergedämmt. Bei weiterem Ansteigen des im Wasser gelösten Ammoniums auf mehr als 1,5 mg/l und einem pH-Wert niedriger als 6 wird das Alarmsystem aktiviert und eine Pushnachricht an den Nutzer geschickt um einen manuellen Wasserwechsel vorzunehmen oder andere Maßnahmen einzuleiten.

### Ausführungsbeispiel für ein Verfahren zur Stressreduktion der Haltungsorganismen bei sich ändernden Umgebungsparametern am Beispiel der Regenbogenforelle:

Die ideale Haltungstemperatur von Regenbogenforellen schwankt zwischen 13 bis 15 °C und wird innerhalb der Zuchtperiode kontinuierlich gehalten. Steigt die Temperatur im Haltungssystem beispielsweise aufgrund von Sonneneinstrahlung oder Umschwung der Lufttemperaturen stark an, spricht man von der Einwirkung von Temperaturstress auf die Forelle.

In dem beschriebenen Verfahren wird bei einer Temperatur von mehr als 16,5 °C, die Fütterung um 50% von der täglichen Futtermenge reduziert. Damit wird verhindert, dass der Metabolismus der Haltungsorganismen zusätzlich angeregt wird. Sollte die Temperatur auf mehr als 18 °C steigen, wird die automatische Fütterung gestoppt. Auf diese Weise wird der Metabolismus gedrosselt und das Stresslevel der Tiere gemindert, bis wieder optimale Haltungstemperaturen erreicht werden. Dies ist ein angepasstes Verfahren um Stress und Mortalität zu reduzieren.

Liegt die Sauerstoffmenge bei weniger als 5,5mg/l wird die Futtermenge um 50% reduziert und der Wasseraustausch um mindestens 20% gesteigert. Liegt die Sauerstoffmenge bei weniger als 4 mg/l wird die Futtermenge um 100% reduziert und der Wasseraustausch um 40% gesteigert. Zusätzlich wird das Licht schrittweise abgedämmt und somit das Aktivitäts- und Stresslevel der Tiere indirekt reduziert.

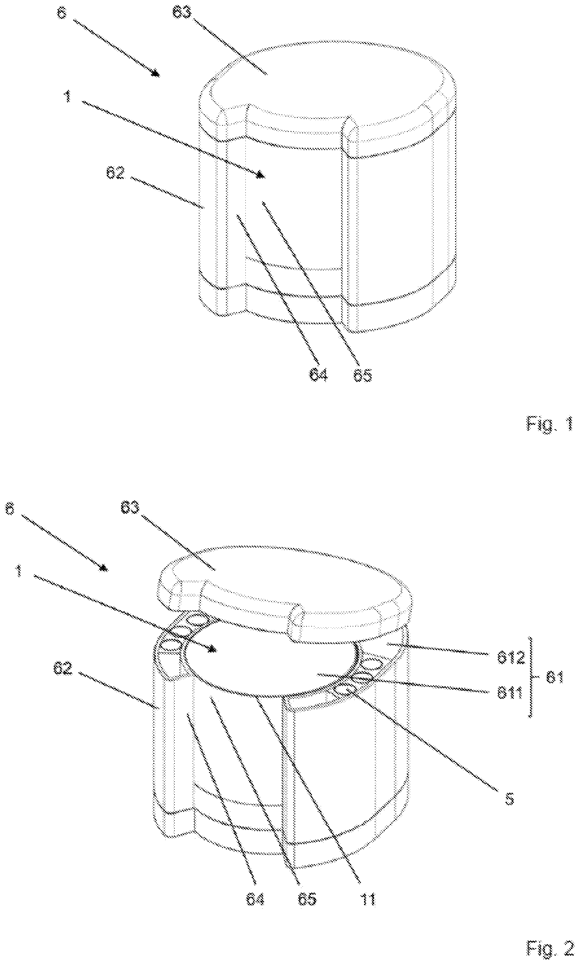

In **Figur 1** ist schematisch eine Ausführungsform des erfindungsgemäßen Kreislaufkultursystems mit geschlossenem Deckel 63 dargestellt. Das Kreislaufkultursystem weist einen Behälter 6 und ein Kulturbecken 1 auf, wobei das Kulturbecken 1 in einem Innenraum des Behälters 6 angeordnet ist.

Der Behälter 6 weist ein Gehäuse 62 und einen das Gehäuse abdeckenden Deckel 63 auf. Das Gehäuse 62 weist eine im Wesentlichen runde Grundfläche auf. Insbesondere ist der Behälter 6 als eine äußere Hülle ausgebildet, um das Kreislaufkultursystem als ein Modul zu isolieren, Temperaturschwankungen auf ein Minimum zu beschränken, und das System vor Umweltschwankungen und anderen äußeren Einflüssen zu schützen.

Der Behälter 6 weist ferner eine Behälterwand 64 auf, welche von einer Öffnung 65 durchbrochen ist. Durch die Öffnung 65 ist das Kulturbecken 1 erkennbar, welches die Öffnung 65 abdeckt.

**Figur 2** zeigt schematisch eine Ausführungsform des erfindungsgemäßen Kreislaufkultursystems mit geöffnetem Deckel 63. Der Behälter 6 umschließt einen Innenraum 61, welcher in der dargestellten Ausführungsform ein erstes Teilkompartiment 611 und ein zweites Teilkompartiment 612 aufweist. Das gesamte Kreislaufsystem zum Umwälzen und Temperieren einer Flüssigkeit ist in dem Innenraum 61 angeordnet. Dabei ist das Kulturbecken 1 in dem ersten Teilkompartiment 611 des Innenraums 61 des Behälters 6 angeordnet, während das Filtersystem 5, sowie das nicht dargestellte Pumpensystem, das nicht dargestellte Wasserreservoir und die nicht dargestellte Temperiervorrichtung in dem zweiten Teilkompartiment 612 des Innenraums 61 des Behälters 6 angeordnet sind.

Die in der Behälterwand 64 des Behälters 6 angeordnete Öffnung 65 wird von einer transparenten Beckenwand 11 des Kulturbeckens 1 abgedeckt, sodass das Innere des Kulturbeckens 1 durch die Öffnung 65 hindurch einsehbar ist.

Das Sensorsystem und die vorzugsweise im Deckel 63 angeordnete Steuervorrichtung sind in den Figuren 1 und 2 nicht dargestellt.

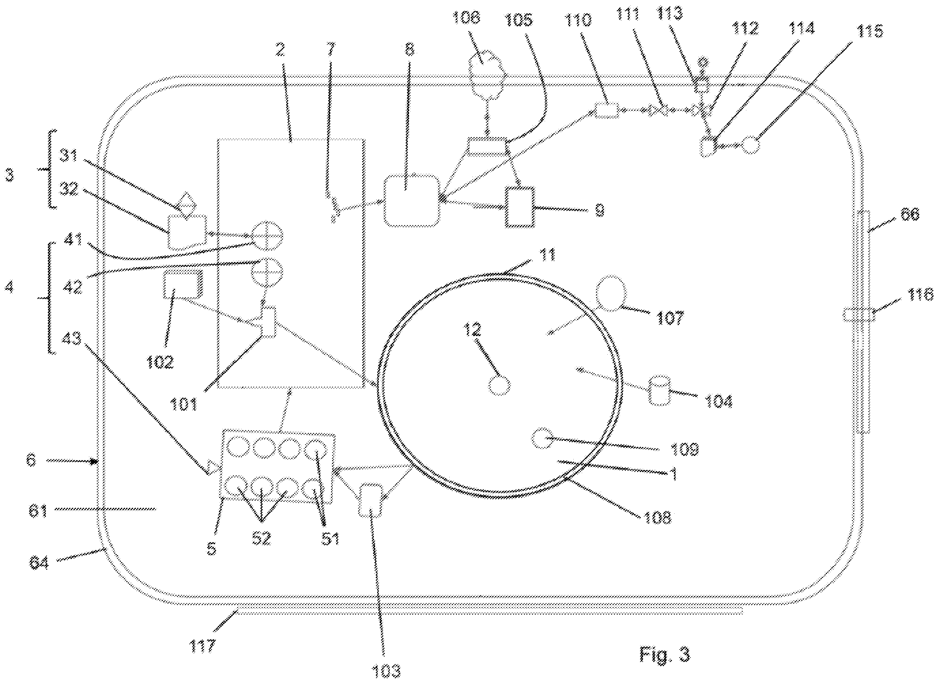

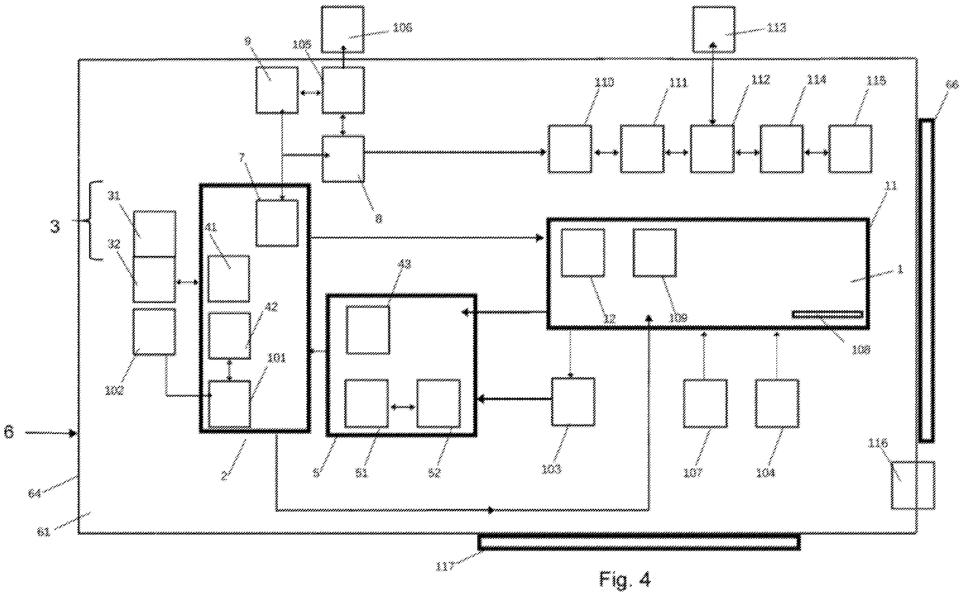

**Figur 3** zeigt eine schematische Darstellung, **Figur 4** ein Schaltbild der wesentlichen Komponenten einer Ausführungsform des erfindungsgemäßen Kreislaufkultursystems.

Die räumliche Anordnung und die Größenverhältnisse sind dabei nicht maßstabsgetreu dargestellt.

Das Kreislaufkultursystem weist ein Kreislaufsystem und einen Behälter 6 auf. Der Behälter 6 umschließt einen Innenraum 61, in dem alle wesentlichen Komponenten des Kreislaufsystems angeordnet sind. Die wesentlichen Komponenten des Kreislaufsystems sind ein Kulturbecken 1, mit einer vorzugsweise transparenten Beckenwand 11, ein Wasserreservoir 2, eine Temperiervorrichtung 3, ein Pumpensystem 4 und ein Filtersystem 5.

In dem Kulturbecken 1 werden aquatische Lebewesen aufgenommen. Das Kulturbecken 1 weist einen Abfluss 12 auf, durch welchen bei Bedarf Flüssigkeit aus dem Kreislaufkultursystem abgelassen werden kann. Der Abfluss 12 ist vorzugsweise mittig im Boden des Kulturbeckens 1 angeordnet, wobei der Boden des Kulturbeckens sich bevorzugt trichterförmig zum Abfluss 12 hin absenkt.

Die im Kreislaufsystem vorhandene Flüssigkeit wird mittels eines Pumpensystems 4 vom Kulturbecken 1, über das Filtersystem 5 in das Wasserreservoir 2 und von dort wieder in das Kulturbecken 1 gepumpt. Dazu weist das Pumpensystem 4 eine (Hauptpumpe 42 auf. Die Hauptpumpe 42 mit einer Venturi-Düse 101 verbunden, über welche die Flüssigkeit im Wasserreservoir 2 bei Bedarf durch einen Sauerstoffkonzentrator 102 geleitet wird.

Des Weiteren weist das Pumpensystem 4 eine Temperierpumpe 41 auf, welche die im Wasserreservoir vorhandene Flüssigkeit durch die Temperiervorrichtung 3 pumpt. Die Temperiervorrichtung 3 weist einen Heizstab 31 und einen Kühler 32 auf. Heizstab 31 und Kühler 32 werden bei Bedarf zugeschaltet. Über eine Sauerstoffpumpe 43 wird der im Filtersystem 5 befindlichen Flüssigkeit bei Bedarf Sauerstoff beigemischt.

Das Filtersystem 5 weist in der dargestellten Ausführungsform 8 Filter auf, von denen zwei anaerobe Biofilter 51 und sechs aerobe Biofilter 52 sind. Die im Kreislaufsystem befindliche Flüssigkeit wird von dem Kulturbecken 1 in die beiden anaeroben Biofilterkammern gepumpt. Die Flüssigkeit wird weiter von den beiden anaeroben durch die sechs aeroben Biofilterkammern und von den sechs aeroben Biofilterkammern in das Wasserreservoir gepumpt.

Mit dem Kulturbecken 1 ist weiterhin ein Waste Disposal 103 verbunden. Das Waste Disposal 103 ist ein Zerkleinerer (Shredder), der gröbere Materialien wie nicht gefressenes Futter und andere schwimmende Großpartikel schreddert und zerkleinert. Die zerkleinerten Partikel können anschließend durch biologische Verfahren im Filtersystem 5 abgebaut werden.

Im Deckel des Behälters 6 ist eine automatische Futterzufuhr 104, die der Futterzufuhr in das Kulturbecken dient, angeordnet.

In dem Wasserreservoir 2 sind die meisten Sensoren des Sensorsystems 7 angeordnet. Ungeachtet der Darstellung können weitere Sensoren im Kulturbecken 1 oder im Innenraum 61 des Behälters 6 angeordnet sein. Es handelt sich dabei beispielsweise um einen oder mehr als einen Temperatursensor, eine oder mehr als eine Sauerstoffsonde, einen oder mehr als einen Durchflusssensor und einen oder mehr als einen pH-Sensor. Weitere Sensoren können ein vorzugsweise im Deckel des Behälters 6 angeordneter Bewegungssensor, im Kulturbecken und/oder im Wasserreservoir angeordnete Wasserstandssensoren, im Behälter angeordnete Lichtsensoren und weitere oben beschriebene Sensoren sein.

Das Sensorsystem 7 sendet Sensordaten an eine Steuervorrichtung 8. Die Steuervorrichtung 8 steuert die einzelnen Pumpen des Pumpensystems 4, die Temperiervorrichtung 3, die Vorrichtung für die Futterzufuhr 104 und eine nicht dargestellte Vorrichtung zur Salzanreicherung der Flüssigkeit an. Dazu weist die Steuervorrichtung ein Abarbeitungsprogramm auf, das die Sensordaten auswertet und mit Erfahrungswerten und/oder vorgegebenen Sollwerten abgleicht.

Die Steuervorrichtung 8 sendet zudem Informationen über Zustandsparameter des Kreislaufkultursystems an eine Anzeigevorrichtung 9, welche bevorzugt ein Human Machine Interface oder Display (z.B. Tablet) ist. Die Anzeigevorrichtung 9 kann direkt an der Außenseite des Behälters 6 angeordnet sein. Über ein Gateway 105 können sowohl die Steuervorrichtung 8 als auch die Anzeigevorrichtung 9 mit einer Cloud 106 kommunizieren.

Eine Kamera 107 erfasst das Innere des Kulturbeckens 1. Die Bilddaten der Kamera 107 können von der Steuervorrichtung 8 direkt ausgewertet und für die Steuerung berücksichtigt werden und/oder auf die Anzeigevorrichtung 9 übertragen werden.

Über eine Beleuchtungsvorrichtung 108 kann das Innere des Kulturbeckens 1 beleuchtet werden. Die Beleuchtungsvorrichtung 108 kann ebenfalls von der Steuervorrichtung 8 angesteuert werden. Die Beleuchtungsvorrichtung 108 kann am oberen Beckenrand des Kulturbeckens 1 oder im Deckel 63 oder im Innenraum 61 des Behälters 6 angeordnet sein. Die Beleuchtungsvorrichtung 108 ist in der dargestellten Ausführungsform als Lichtschlauch am oberen Beckenrand des Kulturbeckens 1 ausgebildet. Sie kann alternativ in Form von einer oder mehr als einer Lampe oder in ähnlicher Form ausgebildet sein.

Im Deckel 63 ist ferner eine Lichtöffnung 109 für den Einfall von Tageslicht in das Innere des Kulturbeckens 1 angeordnet. Die Lichtöffnung 109 kann in anderen Ausführungsformen entfallen.

Die Stromversorgung wird über eine elektrische Schalttafel 110 geregelt. Mit der elektrischen Schalttafel 110 ist über einen Wechselrichter 111 ein Laderegler 112 verbunden. Ein an der Außenseite des Behälters 6, vorzugsweise am Deckel 63 angeordnetes Solarpanel 113 ist an den Laderegler 112 angeschlossen. Ebenfalls an den Laderegler 112 ist eine Batterie 114 angeschlossen, die über eine Steckdose 115 aufgeladen werden kann.

Die Behälterwand 64 des Behälters 6 ist an einer Stelle durch eine nicht dargestellte Öffnung unterbrochen. Der Deckel weist im Bereich dieser Öffnung einen Steg 66 auf, welcher dazu dient, den Bereich über der Öffnung dicht abzuschließen.

Der Behälter 6 kann in seiner Behälterwand 64 und/oder im Deckel weitere nicht dargestellte Öffnungen beispielsweise für Zuluft und/oder Abluft aufweisen.

Der Deckel wird vorzugsweise im Bereich des Steges 66 über ein RFID-Schloss 116 verschlossen.

An der Außenseite des Behälters 6 ist eine Werbewand 117 angeordnet. Diese kann Werbung in digitaler oder analoger Form darstellen.

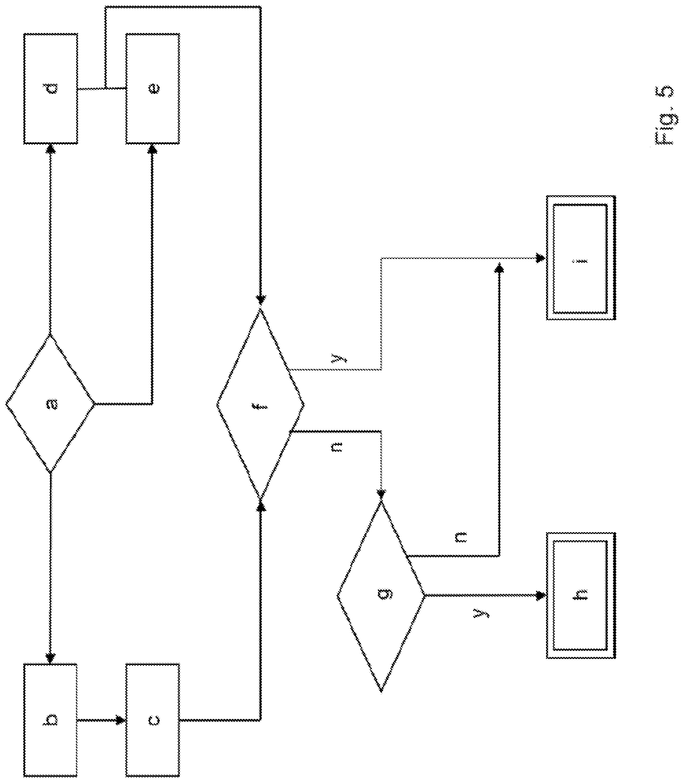

**Figur 5** zeigt eine schematische Darstellung einer Ausführungsform eines Verfahrens zur Kultur von aquatischen Lebewesen, wie es mittels des erfindungsgemäßen Kreislaufkultursystems durchführbar ist.

Ausgangspunkt ist das Kreislaufkultursystem a. Es erfolgt das Einbringen der zu kultivierenden aquatischen Organismen b. Haltungsdaten, die spezifisch für die eingebrachten Organismen sind, wie beispielsweise Programmparameter für die spezifische Art, Verhaltensdaten der aktuell eingebrachten Tiere oder vorherige Haltungsdaten werden als organismenspezifische Programmparameter c (Ausgangswert) in die Steuervorrichtung des Kreislaufkultursystems eingegeben oder liegen bereits werksseitig eingegeben vor. Die Steuervorrichtung erhält außerdem Daten bezüglich der Parameter des Kulturbeckens d (Temperatur, Sauerstoffgehalt, pH-Wert, etc.) und der Umgebungsparameter e (Außentemperatur, Lichteinwirkung, etc.). Die Steuervorrichtung macht einen Abgleich der organismenspezifischen Programmparametern c mit den Parametern des Kulturbeckens d und den Umgebungsparametern e. Entsprechen die Parameter des Kulturbeckens d, beeinflusst durch die Umgebungsparameter e den Ausgangswerten (organismenspezifische Programmparameter c), in Figur4 dargestellt durch ein "y" für yes/ja, so regelt die Steuervorrichtung eine weitere Haltung/Aufzucht i mit den bisherigen Ausgangswerten. Entsprechen die Parameter des Kulturbeckens d, beeinflusst durch die Umgebungsparameter e nicht den Ausgangswerten (organismenspezifische Programmparameter c), in Figur 4 dargestellt durch ein "n" für no/nein, so trifft der Algorithmus der Steuervorrichtung die Entscheidung g, ob die Haltungsbedingungen angepasst werden sollen oder nicht. Fällt die Entscheidung positiv aus (y), so regelt die Steuervorrichtung eine weitere Haltung/Aufzucht h mit neuen Ausgangswerten. Fällt die Entscheidung negativ aus (n), so regelt die Steuervorrichtung eine weitere Haltung/Aufzucht i mit den bisherigen Ausgangswerten.

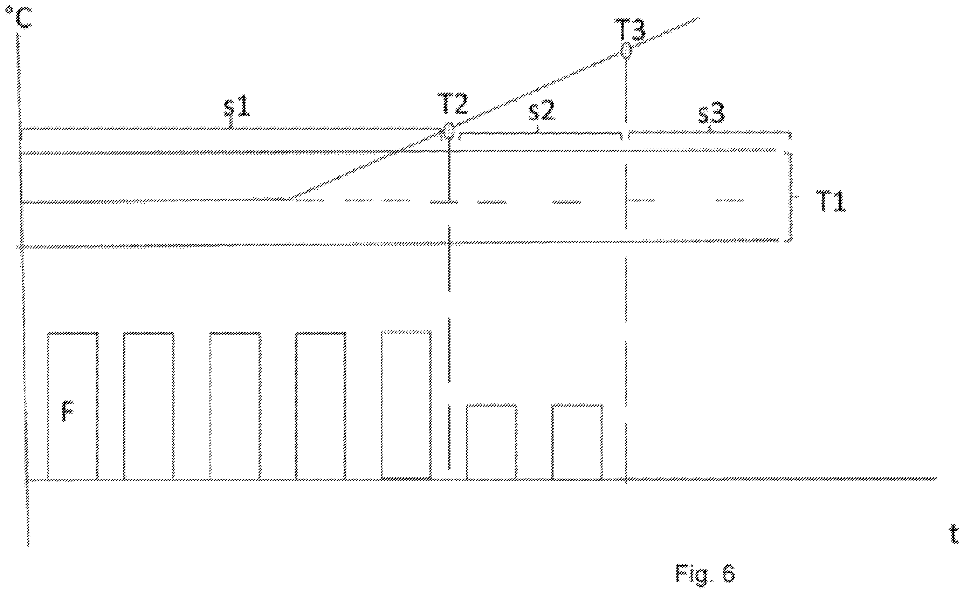

**Figur 6** zeigt eine schematische Darstellung der Futtermengenanpassung am Beispiel der steigenden Temperatur im Kulturbecken bei der Haltung von Regenbogenforellen.

An der Achse C ist die Temperatur aufgetragen, an der Achse t die Zeit. T1 zeigt den optimalen Temperaturbereich. In dem ersten Zeitraum s1 erfolgt die Futtermittelgabe F in regelmäßigen Abständen, mit insgesamt 100% der angesetzten Tagesmenge, auch bei leicht ansteigender Temperatur wird das nicht unterbrochen. Der zweite Zeitraum s2 beginnt sobald der erste Schwellenpunkt T2, also ein bestimmter Temperaturwert, überschritten wurde und die Futtergabe wird um 50% reduziert. Der dritte Zeitraum s3 beginnt sobald der zweite Schwellenwert T3 überschritten wurde, dann wird die Futtermittelgabe bis zum Eintreten der Temperatur im Optimalbereich unterbrochen. Ab dem Zeitraum s2 kann zusätzlich das Licht gedämpft werden.

Werte für die Schwellenpunkte sind dem oben beschriebenen Ausführungsbeispiel zu entnehmen. Wie weiter oben beschrieben können zusätzliche Alarmmaßnahmen, die in diesem Schema nicht dargestellt sind, in dem Zeitraum s2 und s3 veranlasst werden.

### Bezugszeichenliste

- 1: Kulturbecken
- 2: Wasserreservoir
- 3: Temperiervorrichtung
- 4: Pumpensystem
- 5: Filtersystem
- 6: Behälter
- 7: Sensorsystem
- 8: Steuervorrichtung
- 9: Anzeigevorrichtung
- 11: Beckenwand
- 12: Abfluss
- 31: Heizstab
- 32: Kühler
- 41: Temperierpumpe
- 42: Hauptpumpe
- 43: Sauerstoffpumpe
- 51: anaerobe Biofilter
- 52: aerobe Biofilter
- 61: Innenraum
- 62: Gehäuse
- 63: Deckel
- 64: Behälterwand
- 65: Öffnung
- 66: Steg
- 101: Venturi-Düse
- 102: Sauerstoffkonzentrator
- 103: Waste Disposal
- 104: automatische Futterzufuhr
- 105: Gateway
- 106: Cloud
- 107: Kamera
- 108: Beleuchtungsvorrichtung
- 109: Lichtöffnung
- 110: elektrische Schalttafel
- 111: Wechselrichter
- 112: Laderegler
- 113: Solarpanel
- 114: Batterie
- 115: Steckdose
- 116: RFID
- 117: Werbeanzeige
- 611: erstes Teilkompartiment
- 612: zweites Teilkompartiment

- a: Kreislaufkultursystem
- b: zu kultivierende Organismen
- c: Programmparameter für Organismen
- d: Parameter des Kulturbeckens
- e: Umgebungsparameter
- f: Abgleich durch Programmautomatik: Übereinstimmung mit Ausgangswerten?
- g: Entscheidung durch Programmautomatik: Anpassen der Haltungsumgebungen?
- h: weitere Haltung mit neuen Ausgangswerten
- i: weitere Haltung mit bisherigen Ausgangswerten

- s1: Zeitraum 1
- s2: Zeitraum 2
- s3: Zeitraum 3
- t: Zeitachse
- C: Temperaturachse
- T1: optimal Temperaturbereich
- T2: erster Schwellenwert
- T3: zweiter Schwellenwert
- F: Futtermittelrationen

## Patentansprüche

1. Kreislaufkultursystem zur selbsttätigen Kultivierung und/oder Züchtung von aquatischen Lebewesen, aufweisend ein Kreislaufsystem zum Umwälzen und Temperieren einer Flüssigkeit, wobei das Kreislaufsystem ein Kulturbecken (1) zum Aufnehmen der Flüssigkeit, ein Wasserreservoir (2) zum Vorhalten der Flüssigkeit, eine Temperiervorrichtung (3), die eingerichtet ist, der Flüssigkeit thermische Energie zuzuführen und/oder zu entziehen, ein Pumpensystem (4) zum Umwälzen der Flüssigkeit, und ein Filtersystem (5) zum Filtern der Flüssigkeit aufweist, sowie einen Behälter (6), welcher wenigstens einen Innenraum (61) und eine oder mehr als eine Behälterwand (64) aufweist, welche von einer Öffnung (65) durchdrungen ist, wobei die Öffnung (65) und das Kulturbecken (1) derart zueinander eingerichtet sind, dass das Kulturbecken (1) die Öffnung (65) abdeckt, wenn dieses in dem Behälter (6) angeordnet ist, wobei die eine oder mehr als eine Behälterwand (64) einen Dämmstoff aufweist oder daraus gebildet ist, wobei das Kreislaufsystem in dem wenigstens einen Innenraum (61) des Behälters (6) angeordnet ist, wobei das Kreislaufkultursystem ferner aufweist:
• eine Kamera (107), deren Erfassungsfeld im Inneren des Kulturbeckens (1) liegt;
• ein Sensorsystem (7), das in dem wenigstens einen Innenraum (61) angeordnet ist, wobei das Sensorsystem (7) einen Temperatursensor, einen Sauerstoffsensor, einen Durchflusssensor, einen Leitfähigkeitssensor und/oder ein pH-Sensor aufweist; und.
• eine Steuervorrichtung (8) in dem Innenraum (61), wobei die Steuervorrichtung (8) eingerichtet ist, auf Grundlage von ausgewerteten Kameradaten und Daten des Sensorsystems (7) das Kreislaufsystem anzusteuern.

2. Kreislaufkultursystem nach Anspruch 1, wobei der Behälter (6) ein Gehäuse (62) und einen Deckel (63) aufweist und in dem Deckel (63) ein oder mehrere Bewegungs- und/ oder Drucksensoren angeordnet sind, die erkennen, ob der Deckel (63) sich in einem geöffneten oder einem geschlossenen Zustand befindet.

3. Kreislaufkultursystem nach Anspruch 1 oder 2, wobei das Kulturbecken (1) eine transparente Beckenwand (11) aufweist, welche die Öffnung (65) abdeckt.

4. Kreislaufkultursystem nach einem der Ansprüche 1 bis 3, wobei die Steuervorrichtung (8) das Ansteuern des Kreislaufsystems ferner auf Grundlage von gespeicherten Nutzerdaten und/oder aufgezeichneten Erfahrungswerten und/oder einprogrammierten Zielwerten anpasst.

5. Kreislaufkultursystem nach einem der Ansprüche 1 bis 4, ferner aufweisend eine Anzeigevorrichtung (9), welche an einem Äußeren des Behälters (6) befestigt und/oder in diesen integriert ist, wobei die Steuervorrichtung (8) ferner eingerichtet ist, mittels der Anzeigevorrichtung (9) eine oder mehr als eine Angabe über einen Systemzustand des Kreislaufsystems auszugeben.

6. Kreislaufkultursystem nach Anspruch 5, wobei die Anzeigevorrichtung wenigstens drei, bevorzugt wenigstens fünf, besonders bevorzugt wenigstens 10 berührungsgesteuerte Lichtkomponenten aufweist und/oder dass die Anzeigevorrichtung mehr als zwei LED-Platten aufweist.

7. Kreislaufkultursystem nach einem der Ansprüche 1 bis 6, wobei die Steuervorrichtung (8) ferner eingerichtet ist, eine Nachricht gemäß einem Netzwerk-Kommunikationsprotokoll zu generieren und/oder zu übermitteln, wobei die Nachricht eine oder mehr als eine Angabe über einen Systemzustand des Kreislaufsystems aufweist und/oder an ein mobiles und/oder digitales Endgerät adressiert ist.

8. Kreislaufkultursystem nach einem der Ansprüche 1 bis 7, wobei das Filtersystem (5) einen oder mehr als einen anaeroben Biofilter (51) und einen oder mehr als einen aeroben Biofilter (52) aufweist.

9. Kreislaufkultursystem nach Anspruch 8, wobei der eine oder mehr als eine anaerobe Biofilter (51) zwei oder mehr als zwei anaerobe Biofilterkammern aufweist und wobei der eine oder mehr als eine aerobe Biofilter (52) sechs oder mehr als sechs aerobe Biofilterkammern aufweist.

10. Verwenden eines Kreislaufkultursystems nach einem der Ansprüche 1 bis 9 zur selbsttätigen Kultivierung und/oder Züchtung von aquatischen Lebewesen.

11. Verfahren zum selbsttätigen Betreiben eines Kreislaufkultursystems nach einem der Ansprüche 1 bis 9, das Verfahren aufweisend:
• Einbringen von aquatischen Lebewesen in das Kreislaufkultursystem;
• Bringen des Kreislaufsystems in einen Arbeitspunkt gemäß einer Voraussetzung zur Kultivierung und/oder Züchtung der aquatischen Lebewesen, so dass das Kreislaufsystems die Flüssigkeit umwälzt und/oder dieser Sauerstoff zuführt
• selbsttätige Durchführung eines oder mehrerer Besatzzyklen für die Aufzucht/Haltung aquatischer Organismen über eine Programmautomatik; und
• Ansteuern der Temperiervorrichtung durch die Steuervorrichtung bei einer im Inneren des Behälters und/oder einer an der Außenseite des Behälters registrierten Temperaturänderung um ein Erwärmen oder ein Abkühlen der im Kreislaufsystem befindlichen Flüssigkeit selbsttätig herbeiführen.

12. Verfahren nach Anspruch 11, wobei die Steuervorrichtung das Kreislaufkultursystem in den Arbeitspunkt gemäß einer Voraussetzung zur Kultivierung und/oder Züchtung der aquatischen Lebewesen bringt.

13. Verfahren nach Anspruch 11 oder 12, wobei das Kreislaufkultursystem zur selbsttätigen Fischhaltung entsprechend einem vorgegebenen Abarbeitungsprogramm ausgebildet ist, wobei die Haltungsparameter und/oder ein Umgebungszustand im Hinblick auf Zustandsparameter messbar ist/sind oder als Wert/e eingebbar ist/sind.

14. Verfahren nach einem der Ansprüche 11 bis 13, wobei durch die Steuervorrichtung direkt auf sich verändernde Prozess- und/oder Umgebungsbedingungen des Kreislaufkultursystems reagiert wird, ohne, dass ein Eingreifen und Regulieren durch einen Nutzer nötig ist.

15. Verfahren nach Anspruch 14, wobei die Steuervorrichtung das Ansteuern des Kreislaufsystems auf Grundlage von gespeicherten Nutzerdaten und/oder aufgezeichneten Erfahrungswerten und/oder einprogrammierten Zielwerten anpasst.

## Claims

1. Re-Circulating culture system for the autonomous cultivation and/or breeding of aquatic organisms, comprising a circulation system for re-circulating and tempering a liquid, wherein the circulation system comprises a culture tank (1) for holding the liquid, a water reservoir (2) for storing the liquid, a tempering device (3) configured to supply and/or remove thermal energy to/from the liquid, a pumping system (4) for re-circulating the liquid, and a filtration system (5) for filtering the liquid, as well as a container (6) which has at least one interior space (61) and one or more container walls (64) which are penetrated by an opening (65), wherein the opening (65) and the culture tank (1) are arranged relative to each other such that the culture tank (1) covers the opening (65) when it is placed in the container (6), wherein the one or more container walls (64) contain or are formed of an insulating material, wherein the circulation system is arranged in the at least one interior space (61) of the container (6), and wherein the re-circulating culture system further comprises:
• a camera (107) whose detection field is inside the culture tank (1);
• a sensor system (7) arranged in the at least one interior space (61), wherein the sensor system (7) comprises a temperature sensor, an oxygen sensor, a flow sensor, a conductivity sensor, and/or a pH sensor; and
• a control device (8) in the interior space (61), wherein the control device (8) is configured to control the circulation system based on data from the sensor system (7).

2. Re-Circulating culture system according to claim 1, wherein the container (6) comprises a housing (62) and a lid (63), and one or more motion and/or pressure sensors are arranged in the lid (63) to detect whether the lid (63) is in an open or closed state.

3. Re-Circulating culture system according to claim 1 or 2, wherein the culture tank (1) comprises a transparent tank wall (11) that covers the opening (65).

4. Re-Circulating culture system according to any one of claims 1 to 3, wherein the control device (8) further adapts the control of the circulation system based on stored user data and/or recorded empirical values and/or programmed target values.

5. Re-Circulating culture system according to any one of claims 1 to 4, further comprising a display device (9), which is attached to and/or integrated into the exterior of the container (6), wherein the control device (8) is further configured to output one or more indications about a system condition of the circulation system via the display device (9).

6. Re-Circulating culture system according to claim 5, wherein the display device comprises at least three, preferably at least five, more preferably at least 10 touch-controlled light components and/or the display device comprises more than two LED panels.

7. Re-Circulating culture system according to any one of claims 1 to 6, wherein the control device (8) is further configured to generate and/or transmit a message according to a network communication protocol, wherein the message comprises one or more indications about a system condition of the circulation system and/or is addressed to a mobile and/or digital terminal device.

8. Re-Circulating culture system according to any one of claims 1 to 7, wherein the filtration system (5) comprises one or more anaerobic biofilters (51) and one or more aerobic biofilters (52).

9. Re-Circulating culture system according to any one of claims 1 to 8, wherein the one or more anaerobic biofilters (51) comprise two or more anaerobic biofilter chambers and wherein the one or more aerobic biofilters (52) comprise six or more aerobic biofilter chambers.

10. Use of a re-circulating culture system according to any one of claims 1 to 9 for the autonomous cultivation and/or breeding of aquatic organisms.

11. Method for the autonomous operation of a re-circulating culture system according to any one of claims 1 to 9, the method comprising:
• Introducing aquatic organisms into the re-circulating culture system;
• Bringing the circulation system to an operating point according to a requirement for the cultivation and/or breeding of the aquatic organisms, such that the circulation system tempers, circulates, and/or oxygenates the liquid;
• Autonomously carrying out one or more stocking cycles for the rearing/keeping of aquatic organisms through a program automation; and
• Controlling a tempering device by a control device upon detecting a temperature change inside the container and/or on the outside of the container to autonomously induce heating or cooling of the liquid in the circulation system.

12. Method according to claim 11, wherein a control device brings the circulation system to the operating point according to a requirement for the cultivation and/or breeding of the aquatic organisms.

13. Method according to claim 11 or 12, wherein the re-circulating culture system is configured for autonomous fish keeping, preferably according to a predetermined processing program, wherein the keeping parameters and/or an environmental condition can be measured in terms of condition parameters or can be entered as value(s).

14. Method according to any one of claims 11 to 13, wherein the control device directly responds to changing process and/or environmental conditions of the re-circulating culture system without requiring user intervention and regulation.

15. Method according to claim 14, wherein the control device adapts the control of the circulation system based on stored user data and/or recorded empirical values and/or programmed target values.

## Revendications

1. Système de culture en circuit fermé pour la culture et/ou l'élevage automatiques d'organismes vivants aquatiques, comportant un système de circuit fermé pour faire circuler un liquide et le maintenir à température, dans lequel le système de circuit fermé comporte un bassin de culture (1) pour recevoir le liquide, un réservoir d'eau (2) pour garder le liquide en réserve, un dispositif de régulation de la température (3) configuré pour amener de l'énergie thermique au liquide et/ou en extraire, un système de pompage (4) pour la mise en circulation du liquide et un système de filtration (5) pour filtrer le liquide, ainsi qu'une cuve (6) qui comporte au moins un espace intérieur (61) et une ou plus d'une paroi de cuve (64) qui est traversée par une ouverture (65), l'ouverture (65) et le bassin de culture (1) étant configurés l'un par rapport à l'autre de telle façon que le bassin de culture (1) couvre l'ouverture (65) quand il est disposé dans la cuve (6), dans lequel l'une ou plus d'une paroi de cuve (64) comporte un matériau isolant ou est composée de celui-ci, dans lequel le système de circuit fermé est disposé dans l'au moins un espace intérieur (61) de la cuve (6), le système de culture en circuit fermé comprenant en outre :
• une caméra (107) dont le champ d'acquisition se trouve à l'intérieur du bassin de culture (1) ;
• un système de capteurs (7) disposé dans l'au moins un espace intérieur (61), le système de capteurs (7) comportant une sonde de température, un capteur d'oxygène, un capteur de débit, un capteur de conductivité et/ou un capteur de pH, et
• un dispositif de commande (8) dans l'espace intérieur (61), lequel dispositif de commande (8) est configuré pour commander le système de circuit fermé sur la base de données de caméra analysées et de données du système de capteurs (7).

2. Système de culture en circuit fermé selon la revendication 1, dans lequel la cuve (6) comporte un corps (62) et un couvercle (63) et un ou plusieurs capteurs de mouvement et/ou de pression sont disposés dans le couvercle (63) et reconnaissent si le couvercle (63) est ouvert ou fermé.

3. Système de culture en circuit fermé selon la revendication 1 ou 2, dans lequel le bassin de culture (1) comporte une paroi de bassin transparente (11) qui couvre l'ouverture (65).

4. Système de culture en circuit fermé selon l'une des revendications 1 à 3, dans lequel le dispositif de commande (8) adapte en outre la commande du système de circuit fermé sur la base de données d'utilisateur en mémoire et/ou de valeurs d'expérience enregistrées et/ou de valeurs de consigne programmées.

5. Système de culture en circuit fermé selon l'une des revendications 1 à 4, comprenant en outre un dispositif d'affichage (9) qui est fixé sur l'extérieur de la cuve (6) et/ou intégrée dans celle-ci, le dispositif de commande (8) étant en outre configuré pour émettre en sortie, au moyen du dispositif d'affichage (9), une ou plus d'une indication de l'état du système de circuit fermé.

6. Système de culture en circuit fermé selon la revendication 5, dans lequel le dispositif d'affichage comporte au moins trois, de préférence au moins cinq, en particulier au moins dix composants lumineux tactiles et/ou le dispositif d'affichage comporte plus de deux panneaux à DEL.

7. Système de culture en circuit fermé selon l'une des revendications 1 à 6, dans lequel le dispositif de commande (8) est en outre configuré pour générer et/ou transmettre un message selon un protocole de communication en réseau, le message comportant une ou plus d'une indication sur l'état du système de circuit fermé et/ou étant adressé à un terminal mobile et/ou numérique.

8. Système de culture en circuit fermé selon l'une des revendications 1 à 7, dans lequel le système de filtration (5) comprend un ou plus d'un biofiltre anaérobie (51) et un ou plus d'un biofiltre aérobie (52).

9. Système de culture en circuit fermé selon la revendication 8, dans lequel l'un ou plus d'un biofiltre anaérobie (51) comporte deux ou plus de deux chambres de biofiltration anaérobie et dans lequel un ou plus d'un biofiltre aérobie (52) comporte six ou plus de six chambres de biofiltration aérobie.

10. Utilisation d'un système de culture en circuit fermé selon l'une des revendications 1 à 9 pour la culture et/ou l'élevage automatiques d'organismes vivants aquatiques.

11. Procédé d'exploitation automatique d'un système de culture en circuit fermé selon l'une des revendications 1 à 9, lequel procédé comprend :
• l'introduction d'organismes vivants aquatiques dans le système de culture en circuit fermé ;
• la conduite du système de circuit fermé à un point de fonctionnement correspondant à une condition de culture et/ou d'élevage des organismes vivants aquatiques de telle manière que le système de circuit fermé fasse circuler le liquide et/ou lui fournisse de l'oxygène ;
• l'exécution automatique d'un ou plusieurs cycles de charge pour l'élevage/le maintien des organismes aquatiques à l'aide d'un automatisme programmé ; et
• la commande du dispositif de régulation de la température par le dispositif de commande si un changement de température est enregistré à l'intérieur de la cuve et/ou sur une surface extérieure de la cuve, de façon à produire automatiquement un chauffage ou un refroidissement du liquide qui se trouve dans le système de circuit fermé.

12. Procédé selon la revendication 11, dans lequel le dispositif de commande amène le système de culture en circuit fermé au point de fonctionnement correspondant à une condition de culture et/ou d'élevage des organismes vivants aquatiques.

13. Procédé selon la revendication 11 ou 12, dans lequel le système de culture en circuit fermé est conçu pour l'élevage automatique de poissons selon un programme d'exécution prédéterminé, les paramètres d'élevage et/ou un état de l'environnement pouvant être mesurés par rapport aux paramètres d'état ou pouvant être saisis sous forme de valeurs.

14. Procédé selon l'une des revendications 11 à 13, dans lequel le dispositif de commande réagit directement à des changements des conditions de process et/ou d'environnement du système de culture en circuit fermé, sans qu'une intervention et une régulation par un utilisateur soient nécessaires.

15. Procédé selon la revendication 14, dans lequel le dispositif de commande adapte la commande du système de circuit fermé sur la base de données d'utilisateur en mémoire et/ou de valeurs d'expérience enregistrées et/ou de valeurs de consigne programmées.
